# DEMANDE DE BREVET EUROPEEN

(11) **EP 1 496 226 A1**
(43) Date de publication de la demande: **12.01.2005**
(21) Numéro de dépôt: 04300420.9
(22) Date de dépôt: 01.07.2004
(51) Int. Cl.: F02D 41/04, F02D 41/00, F02D 31/00

(54) **Procédé et dispositif pour réduire le niveau acoustique sonore d'un moteur thermique et de son système d'échappement**

(30) Priorité: 04.07.2003 FR 0308188
(71) Demandeur: Faurecia Systèmes d'échappement, Société par actions simplifiée, 92000 NANTERRE (FR); Renault S.A.S., Société par actions simplifiée, 92100 BOULOGNE BILLANCOURT (FR)
(72) Inventeur: Gaurrand, Frédéric, 25200, Bethoncourt (FR); Vurpillot, Vincent, 90400, Dorans (FR); Ziegelmeyer, Jean, 67340, Weiterswiller (FR)
(74) Mandataire: Rhein, Alain

(57) **Abrégé**

L'invention concerne un procédé pour réduire le niveau acoustique sonore d'un moteur thermique (1) et de son système d'échappement, ce moteur (1) étant alimenté en mélange carburé par l'intermédiaire de moyens d'alimentation en air (2) et en carburant (3) et associé à des moyens (4) pour commander ces moyens d'alimentation (2, 3).

Ce procédé consiste à agir sur les moyens d'alimentation en air (2) pour assurer une réduction, voire une coupure, de l'alimentation en air du moteur (1), ceci en cas de relâchement ou d'interruption de l'actionnement des moyens de commande (4).

L'invention concerne encore un dispositif (7) pour réduire un tel niveau acoustique sonore et comportant des moyens (10) pour, en cas de relâchement ou d'interruption de l'actionnement des moyens de commande (4), agir sur les moyens d'alimentation en air (2) en assurant une réduction, voire une coupure, de l'alimentation en air du moteur (1).

## Description

La présente invention a trait à un procédé ainsi qu'à un dispositif pour réduire le niveau acoustique sonore d'un moteur thermique et de son système d'échappement équipant un véhicule automobile, ce moteur étant, d'une part, alimenté en mélange carburé par l'intermédiaire de moyens d'alimentation en air et de moyens d'alimentation en carburant et, d'autre part, associé à des moyens agencés pour commander ces moyens d'alimentation.

L'invention concerne le domaine de la fabrication des équipements destinés à l'industrie automobile, plus particulièrement ceux destinés à venir compléter un moteur thermique et conçus aptes à assurer la réduction des émissions sonores produites par un tel moteur et son système d'échappement.

A ce propos, il convient d'observer qu'un tel moteur ainsi que son système d'échappement produisent des émissions sonores qui ont tendance à augmenter lors d'une montée en régime sous l'effet de l'actionnement de l'accélérateur mais également lors d'un relâchement ou d'une interruption de l'actionnement de cet accélérateur. Dans ces derniers cas, on remarquera que le niveau sonore augmente de manière substantielle, notamment dans certaines plages déterminées de régime-moteur, et que cette augmentation peut notamment être attribuée à la contribution des harmoniques au niveau acoustique.

La présente invention se veut à même de remédier aux nuisances acoustiques sonores générées par un moteur thermique et par son système d'échappement lors d'un relâchement ou d'une interruption de l'actionnement de l'accélérateur se produisant, notamment, lorsque le conducteur souhaite faire décélérer son véhicule.

A cet effet, la présente invention concerne un procédé pour réduire le niveau acoustique sonore d'un moteur thermique et de son système d'échappement équipant un véhicule automobile, ce moteur étant, d'une part, alimenté en mélange carburé par l'intermédiaire de moyens d'alimentation en air et de moyens d'alimentation en carburant et, d'autre part, associé à des moyens agencés pour commander ces moyens d'alimentation, ce procédé étant caractérisé par le fait que l'on agit sur les moyens d'alimentation en air en vue d'assurer une réduction, voire une coupure, de l'alimentation en air du moteur, ceci en cas de relâchement ou d'interruption de l'actionnement des moyens de commande des moyens d'alimentation.

Selon une autre caractéristique, l'on procède à une détection d'un relâchement ou d'une interruption de l'actionnement des moyens de commande des moyens d'alimentation, ceci avant d'agir sur les moyens d'alimentation en air en vue de réduire, voire de couper, l'alimentation en air du moteur

Une caractéristique additionnelle consiste en ce que l'on assure un relevé du régime du moteur pour, en cas de relâchement ou d'interruption de l'actionnement des moyens de commande des moyens d'alimentation, agir, en fonction du régime-moteur relevé, sur les moyens d'alimentation en air en vue d'assurer une réduction, voire une coupure, de l'alimentation en air du moteur.

Encore une autre caractéristique de l'invention consiste en ce que, d'une part, on délimite au préalable au moins une plage déterminée de régime-moteur et, d'autre part, lorsque l'on relève un régime-moteur se situant dans une telle plage de régime-moteur, on agit sur les moyens d'alimentation en air en procédant à une réduction de l'alimentation en air du moteur tout en assurant le passage d'un flux d'air tandis que lorsque l'on relève un régime-moteur se situant en dehors d'une telle plage de régime-moteur, on agit sur les moyens d'alimentation en air en procédant à une coupure totale de l'alimentation en air du moteur.

En fait, lorsque l'on procède à une réduction de l'alimentation en air du moteur, on réduit cette alimentation jusqu'à atteindre entre 5 et 40% de la capacité totale d'alimentation en air du moteur par ces moyens d'alimentation en air.

L'invention concerne, encore, un dispositif pour réduire le niveau acoustique sonore d'un moteur thermique et de son système d'échappement équipant un véhicule automobile, ce moteur étant, d'une part, alimenté en mélange carburé par l'intermédiaire de moyens d'alimentation en air et de moyens d'alimentation en carburant et, d'autre part, associé à des moyens agencés pour commander ces moyens d'alimentation, ce dispositif étant caractérisé par le fait qu'il comporte des moyens conçus aptes, en cas de relâchement ou d'interruption de l'actionnement des moyens de commande des moyens d'alimentation, à agir sur les moyens d'alimentation en air en assurant une réduction, voire une coupure, de l'alimentation en air du moteur.

Ce dispositif comporte des moyens agencés pour détecter un relâchement ou une interruption de l'actionnement des moyens de commande des moyens d'alimentation.

Ce dispositif comporte, encore, des moyens agencés pour assurer un relevé du régime du moteur et des moyens conçus aptes, en cas de relâchement ou d'interruption de l'actionnement des moyens de commande, à agir sur les moyens d'alimentation en air pour réduire, voire pour couper, l'alimentation en air du moteur, ceci en fonction du régime-moteur relevé.

Encore une autre caractéristique de l'invention consiste en ce que les moyens agissant sur les moyens d'alimentation en air comportent, d'une part, des moyens conçus aptes à procéder à une comparaison entre le régime-moteur relevé et au moins une plage déterminée de régime-moteur et, d'autre part, des moyens, associés aux moyens de comparaison, et conçus aptes à commander, de manière spécifique en fonction du résultat de la comparaison, les moyens d'alimentation en air pour assurer une réduction, voire une coupure, de l'alimentation en air du moteur.

Une autre caractéristique consiste en ce que ce dispositif comporte au moins un calculateur au niveau duquel sont définis les moyens de commande des moyens d'alimentation et/ou les moyens de détection et/ou les moyens aptes à agir sur les moyens d'alimentation en air et/ou, le cas échéant, les moyens de comparaison et/ou les moyens de commande spécifique des moyens d'alimentation en air et/ou les moyens de commande des moyens de relevé du régime-moteur.

Les avantages de la présente invention consistent en ce que le procédé et le dispositif permettent, de manière automatique et en cas de relâchement ou d'interruption de l'actionnement des moyens de commande des moyens d'alimentation, de procéder, soit à une réduction, soit à une coupure, de l'alimentation en air du moteur, ceci, notamment, en fonction du régime-moteur relevé.

Encore un autre avantage consiste en ce que l'invention permet de réguler l'alimentation en air du moteur, ceci en fonction du régime-moteur relevé lors d'une interruption ou d'un relâchement de l'actionnement de l'accélérateur afin de réduire de manière optimale le niveau acoustique sonore d'un moteur et son système d'échappement. Plus précisément, l'invention permet de réduire de manière appropriée l'alimentation en air du moteur, ceci pour des régimes moteur ou pour des plages déterminées de régime-moteur pour lesquelles ce moteur et/ou son système d'échappement présentent un niveau acoustique sonore élevé ce qui permet, avantageusement, de diminuer, de manière substantielle, les nuisances sonores générées par un ensemble moteur-échappement.

L'invention est exposée plus en détail dans la description qui va suivre se rapportant à des modes de réalisation donnés à titre d'exemples et illustrés dans les figures du dessin ci-joint.

La figure 1 est vue schématisée correspondant à un premier mode de réalisation du dispositif selon l'invention.

La figure 2 est une vue similaire à la précédente et correspond à un second mode de réalisation de l'invention.

L'invention concerne le domaine de la fabrication des équipements destinés à l'industrie automobile, plus particulièrement ceux destinés à venir compléter un moteur thermique et conçus aptes à assurer la réduction des émissions sonores produites par un tel moteur et son système d'échappement.

A ce propos, on observera qu'un tel moteur 1 est alimenté en mélange carburé par l'intermédiaire, d'une part, de moyens d'alimentation en air 2 et, d'autre part, de moyens d'alimentation en carburant 3.

Ce moteur 1 est, encore, associé à des moyens 4 agencés pour commander lesdits moyens d'alimentation en air 2 ainsi que lesdits moyens d'alimentation en carburant 3.

De tels moyens de commande 4 sont raccordés à des moyens 5 conçus aptes à assurer l'actionnement de ces moyens de commande 4 en vue de la commande desdits moyens d'alimentation 2 ; 3, ces moyens d'actionnement 5 étant, usuellement, constitués par un accélérateur 6 sur lequel le conducteur agit lorsqu'il souhaite faire accélérer ou décélérer son véhicule.

A ce propos, on observera que le relâchement ou l'interruption de l'actionnement de ces moyens de commande 4 par ces moyens d'actionnement 5 engendre des nuisances sonores au niveau dudit moteur 1 et de son système d'échappement (non représenté).

En fait, l'invention se veut à même de remédier à cet inconvénient au travers d'un dispositif 7 et d'un procédé (apte à être mis en oeuvre par ce dispositif 7) conçus aptes à réduire le niveau acoustique sonore de ce moteur thermique 1 et de son système d'échappement.

Pour ce faire, le dispositif 7 comporte des moyens 10 conçus aptes, en cas de relâchement ou d'interruption de l'actionnement des moyens de commande 4 par les moyens d'actionnement 5, à agir sur les moyens 2 d'alimentation en air en assurant une réduction, voire une coupure, de l'alimentation en air du moteur 1.

Une caractéristique additionnelle consiste en ce que le dispositif 7 comporte des moyens 8 agencés pour détecter un relâchement ou une interruption de l'actionnement, par les moyens d'actionnement 5, des moyens de commande 4 des moyens d'alimentation 2 ; 3. C'est, plus particulièrement, en cas de détection d'un tel relâchement ou d'une telle interruption, que les moyens 10 agissent sur les moyens 2 d'alimentation en air.

Selon une autre caractéristique de l'invention, ce dispositif 7 comporte, encore, des moyens 9 agencés pour assurer un relevé du régime du moteur 1.

Les moyens 10 conçus aptes à agir sur les moyens 2 d'alimentation en air en cas de relâchement ou d'interruption de l'actionnement des moyens de commande 4 (notamment après détection d'un tel relâchement ou d'une telle interruption), sont alors agencés pour réduire, voire pour couper, l'alimentation en air du moteur 1, ceci en fonction du régime-moteur relevé par lesdits moyens 9 appropriés.

A ce propos, il convient d'observer que les moyens 9 conçus aptes à relever le régime-moteur sont raccordés, de préférence en direct, auxdits moyens 10 conçus aptes à agir sur les moyens 2 d'alimentation en air.

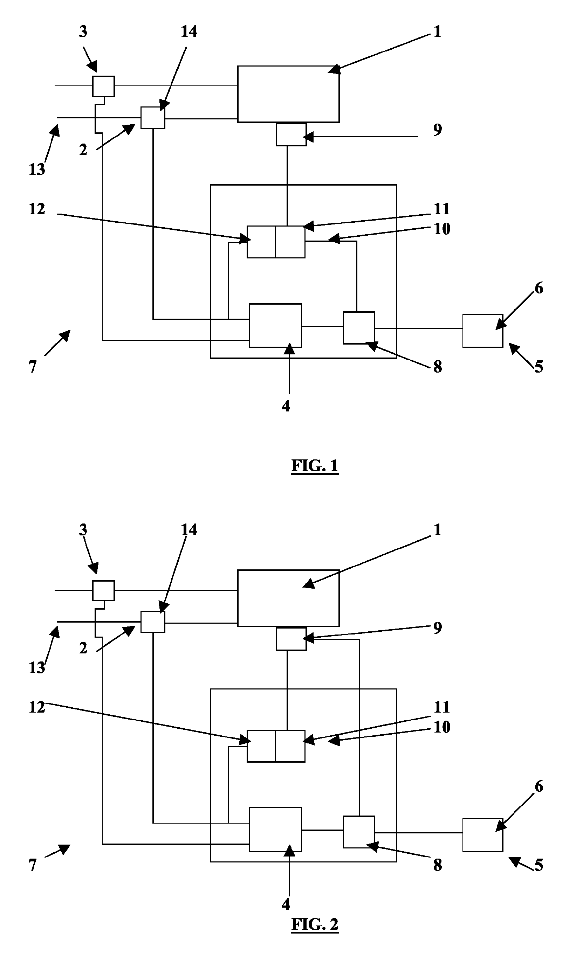

Selon un premier mode de réalisation de l'invention visible figure 1, les moyens 9 de relevé du régime-moteur sont conçus aptes à fournir en continu, aux moyens d'action 10, une information relative à ce régime-moteur.

Dans un pareil cas, les moyens de détection 8 sont raccordés aux moyens 10 conçus aptes à agir sur les moyens 2 d'alimentation en air pour, en cas de détection par ces moyens de détection 8 d'une altération (relâchement ou interruption) de l'actionnement des moyens de commande 4, agir directement sur ces moyens 10 en vue d'une prise en compte directe, par ces derniers 10, d'une part, de ladite altération et, d'autre part, du régime-moteur relevé au moment de l'occurrence de cette altération, ceci en vue d'une action appropriée sur les moyens d'alimentation 2 en air.

Selon un autre mode de réalisation, les moyens de détection 8 sont raccordés aux moyens 9 de relevé du régime-moteur (directement comme visible figure 2 ou encore par l'intermédiaire des moyens d'action 10) pour, en cas de détection par ces moyens de détection 8 d'une altération (relâchement ou interruption) de l'actionnement des moyens de commande 4, commander un relevé du régime-moteur par lesdits moyens de relevé 9 qui transmettent l'information y relative auxdits moyens 10 agencés pour agir sur les moyens 2 d'alimentation en air.

Dans un pareil cas, l'on assure une commande des moyens 9 de relevé du régime-moteur en cas de détection, par lesdits moyens de détection 8, d'un relâchement ou d'une interruption de l'actionnement des moyens de commande 4, une telle commande étant assurée par l'intermédiaire de moyens que comporte ledit dispositif 7 et qui sont définis, selon le cas, au niveau des moyens de détection 8 ou des moyens d'action 10.

Il convient d'observer que l'ensemble constitué par un moteur 1 et son système d'échappement peut présenter une signature acoustique caractérisée par des émissions sonores plus ou moins importantes selon le régime de ce moteur 1. Plus particulièrement, il a été constaté que pour certaines plages déterminées de régime-moteur, une telle émission sonore était substantiellement plus importante qu'en dehors de ces plages, ceci notamment en cas de relâchement ou d'interruption de l'actionnement des moyens de commande 4.

La présente invention se veut, encore, de réduire le niveau acoustique sonore émis lorsque ledit moteur 1 présente un régime-moteur situé, plus particulièrement, dans l'une de ces plages déterminées de régime-moteur.

Pour ce faire et selon une autre caractéristique de l'invention, les moyens 10 conçus aptes à agir sur les moyens 2 d'alimentation en air comportent, d'une part, des moyens 11 conçus aptes à procéder à une comparaison entre le régime-moteur relevé par les moyens de relevé 9 et au moins une plage déterminée de régime-moteur et, d'autre part, des moyens 12, associés aux moyens de comparaison 11, et conçus aptes à commander, de manière spécifique en fonction du résultat de la comparaison, les moyens 2 d'alimentation en air pour assurer une réduction, voire une coupure, de l'alimentation en air du moteur 1.

A ce propos, on observera que les moyens 12 conçus aptes à commander, de manière spécifique, les moyens 2 d'alimentation en air sont agencés pour, en cas de relevé d'un régime-moteur se situant dans une plage déterminée de régime-moteur, commander, au niveau desdits moyens 2 d'alimentation en air, la réduction de l'alimentation en air du moteur 1 tout en assurant le passage d'un flux d'air.

De tels moyens 12, conçus aptes à commander de manière spécifique lesdits moyens 2 d'alimentation en air, sont, encore, agencés pour, en cas de relevé d'un régime-moteur se situant en dehors d'une telle plage déterminée de régime-moteur commander, au niveau desdits moyens 2 d'alimentation en air, l'interruption totale de l'alimentation en air du moteur 1.

Un tel mode de réalisation permet, par exemple, lorsque l'on relève un régime-moteur se situant en dehors d'une telle plage de régime-moteur et correspondant sensiblement à celui du moteur 1 au ralenti (plus particulièrement de l'ordre de 850 tours/minute), d'interrompre l'alimentation en air de ce moteur 1.

Il convient d'observer que, lorsque l'on assure la réduction de l'alimentation en air du moteur 1 tout en assurant le passage d'un flux d'air, ce flux d'air représente une alimentation en air comprise entre 5 et 40% (de préférence comprise entre 15 et 25%) de la capacité totale d'alimentation en air du moteur 1 par lesdits moyens d'alimentation 2 en air.

A ce propos, on observera que c'est, plus particulièrement, le passage d'un tel flux d'air qui permet de réduire le niveau acoustique sonore de l'ensemble constitué par le moteur 1 et son système d'échappement et par conséquent d'atténuer les nuisances sonores de cet ensemble.

En fait et selon un mode de réalisation particulier, la réduction de l'alimentation en air peut être modulée en fonction, selon le cas, du régime-moteur relevé et/ou de la plage de régime-moteur considérée et/ou de la manière dont se produit l'altération (relâchement ou interruption) de l'actionnement. A titre d'exemple, la réduction de l'alimentation peut être d'autant plus modérée que le régime-moteur est élevé et/ou que l'altération de l'actionnement est brusque.

Selon une autre caractéristique de l'invention, ces moyens 2 d'alimentation en air du moteur 1 se présentent, au moins en partie, sous la forme d'une conduite 13 d'admission d'air équipée d'une vanne 14. C'est, plus particulièrement, sur cette vanne 14 que vont agir lesdits moyens de commande 4 et 12, notamment en vue de réduire, voire de couper, l'alimentation en air du moteur 1 ayant pour effet de diminuer les nuisances acoustiques sonores.

Selon un premier mode de réalisation non représenté, les moyens 10 conçus aptes à agir sur les moyens 2 d'alimentation en air, voire, encore, les moyens 8 de détection de l'altération (relâchement ou interruption) de l'actionnement des moyens de commande 4, peuvent être, d'une part, intégrés dans un appareil autonome et indépendant des moyens de commande 4 des moyens d'alimentation 2 ; 3 et, d'autre part, aménagés en parallèle à ces moyens de commande 4.

Cependant et selon un mode de réalisation préféré, ce sont, plus particulièrement, lesdits moyens de commande 4 des moyens d'alimentation 2 ; 3 qui intègrent les moyens 10 conçus aptes à agir sur les moyens 2 d'alimentation en air, voire encore les moyens 8 de détection de l'altération de l'actionnement de ces moyens de commande 4.

Finalement et selon une autre caractéristique de l'invention, le dispositif 7 comporte au moins un calculateur au niveau duquel sont définis les moyens de commande 4 des moyens d'alimentation 2 ; 3 et/ou les moyens de détection 8 et/ou les moyens 10 aptes à agir sur ces moyens 2 d'alimentation en air et/ou, le cas échéant, les moyens de comparaison 11 et/ou les moyens 12 de commande spécifique des moyens 2 d'alimentation en air et/ou les moyens de commande des moyens 9 de relevé du régime-moteur.

En fait, un mode de réalisation préféré de l'invention consiste à intégrer une partie au moins de ces moyens (4, 8, 10, 11, 12) à l'intérieur d'un boîtier, d'une part, raccordé aux moyens d'actionnement 5 et/ou aux moyens de relevé 9 du régime-moteur et/ou aux moyens d'alimentation 2 ; 3 et, d'autre part, disposé, par exemple, dans le compartiment moteur du véhicule qui en est équipé.

Les caractéristiques techniques susmentionnées et que présente le dispositif 7 selon l'invention permettent de mettre en oeuvre un procédé consistant à réduire le niveau acoustique sonore d'un moteur thermique 1 et de son système d'échappement équipant un véhicule automobile.

Un tel procédé consiste, en fait, en ce que l'on agit sur les moyens 2 d'alimentation en air en vue d'assurer une réduction, voire une coupure, de l'alimentation en air du moteur 1, ceci dans le cas d'un relâchement ou d'une interruption de l'actionnement des moyens 4 de commande des moyens d'alimentation 2 ; 3.

Selon une autre caractéristique, l'on procède à une détection d'un relâchement ou d'une interruption de l'actionnement des moyens 4 de commande des moyens d'alimentation 2 ; 3, ceci avant d'agir sur les moyens 2 d'alimentation en air en vue de réduire, voire de couper, l'alimentation en air du moteur 1.

Encore une autre caractéristique de ce procédé consiste en ce que l'on assure un relevé du régime du moteur 1 pour, en cas de relâchement ou d'interruption de l'actionnement des moyens 4 de commande des moyens d'alimentation 2 ; 3 (notamment en cas de détection d'un tel relâchement ou d'une telle interruption), agir, en fonction du régime-moteur relevé, sur les moyens 2 d'alimentation en air en vue d'assurer une réduction, voire une coupure, de l'alimentation en air du moteur 1.

Selon un premier mode de réalisation et tel que décrit plus haut, le relevé du régime-moteur est assuré en continu par lesdits moyens de relevé 9.

Cependant et selon un mode de réalisation préféré, ce procédé consiste en ce que, lorsque l'on détecte (par l'intermédiaire des moyens de détection 8) un relâchement ou une interruption de l'actionnement des moyens 4 de commande des moyens d'alimentation 2 ; 3, l'on commande, alors, un relevé du régime-moteur, ceci par l'intermédiaire des moyens 9 conçus aptes à assurer un tel relevé.

Tel qu'évoqué ci-dessus, la signature acoustique d'un ensemble constitué par un moteur 1 et son système d'échappement fait que, pour certaines plages déterminées de régime-moteur, l'émission sonore est substantiellement plus importante qu'en dehors de ces plages, ceci notamment en cas de relâchement ou d'interruption de l'actionnement des moyens de commande 4.

Afin de remédier à cet inconvénient, l'invention consiste, tout d'abord, en ce que l'on détermine et en ce que l'on délimite au moins une plage de régime-moteur pour laquelle l'ensemble moteur-échappement présente une telle émission sonore.

Le procédé selon l'invention consiste, alors, en ce que, lorsque l'on relève (par l'intermédiaire des moyens de relevé 9) un régime-moteur se situant dans une telle plage de régime-moteur, on agit sur les moyens 2 d'alimentation en air en procédant à une réduction de l'alimentation en air du moteur 1 tout en assurant le passage d'un flux d'air tandis que lorsque l'on relève un régime-moteur se situant en dehors d'une telle plage de régime-moteur, on agit sur les moyens 2 d'alimentation en air en procédant à une coupure totale de l'alimentation en air du moteur 1.

A ce propos, on remarquera que, lorsque l'on procède à une réduction de l'alimentation en air du moteur 1, on réduit cette alimentation jusqu'à atteindre entre 5 et 40% (de préférence entre 15 et 25%) de la capacité totale d'alimentation en air par ces moyens 2.

Un tel mode de réalisation permet, pour un ensemble moteur-échappement, de réduire, de manière substantielle et dans au moins une plage déterminée de régime-moteur, les nuisances sonores que cet ensemble est susceptible de présenter, dans cette ou ces plages de régime-moteur, en l'absence d'application du procédé selon l'invention.

Un tel mode de réalisation permet, également, lorsque l'on relève un régime-moteur se situant en dehors d'une telle plage et correspondant, sensiblement, à celui du moteur 1 au ralenti (environ 850 tours/minute), de procéder à une coupure totale de l'alimentation en air du moteur 1 en agissant sur les moyens 2 d'alimentation en air.

## Revendications

1. Procédé pour réduire le niveau acoustique sonore d'un moteur thermique (1) et de son système d'échappement équipant un véhicule automobile, ce moteur (1) étant, d'une part, alimenté en mélange carburé par l'intermédiaire de moyens d'alimentation en air (2) et de moyens d'alimentation en carburant (3) et, d'autre part, associé à des moyens (4) agencés pour commander ces moyens d'alimentation (2, 3), **caractérisé par le fait que** l'on agit sur les moyens d'alimentation en air (2) en vue d'assurer une réduction, voire une coupure, de l'alimentation en air du moteur (1), ceci en cas de relâchement ou d'interruption de l'actionnement des moyens de commande (4) des moyens d'alimentation (2, 3).

2. Procédé selon la revendication 1, **caractérisé par le fait que** l'on procède à une détection d'un relâchement ou d'une interruption de l'actionnement des moyens de commande (4) des moyens d'alimentation (2, 3), ceci avant d'agir sur les moyens d'alimentation en air (2) en vue de réduire, voire de couper, l'alimentation en air du moteur (1).

3. Procédé selon l'une quelconque des revendications 1 ou 2, **caractérisé par le fait que** l'on assure un relevé du régime du moteur (1) pour, en cas de relâchement ou d'interruption de l'actionnement des moyens de commande (4) des moyens d'alimentation (2, 3), agir, en fonction du régime-moteur relevé, sur les moyens d'alimentation en air (2) en vue d'assurer une réduction, voire une coupure, de l'alimentation en air du moteur (1).

4. Procédé selon la revendication 3, **caractérisé par le fait que** l'on commande un relevé du régime-moteur en cas de relâchement ou d'interruption de l'actionnement des moyens de commande (4) des moyens d'alimentation (2, 3).

5. Procédé selon l'une quelconque des revendications 3 ou 4, **caractérisé par le fait que**, d'une part, on délimite au préalable au moins une plage déterminée de régime-moteur et, d'autre part, lorsque l'on relève un régime-moteur se situant dans une telle plage de régime-moteur, on agit sur les moyens d'alimentation en air (2) en procédant à une réduction de l'alimentation en air du moteur (1) tout en assurant le passage d'un flux d'air tandis que lorsque l'on relève un régime-moteur se situant en dehors d'une telle plage de régime-moteur, on agit sur les moyens d'alimentation en air (2) en procédant à une coupure totale de l'alimentation en air du moteur (1).

6. Procédé selon l'une quelconque des revendications précédentes, **caractérisé par le fait que**, lorsque l'on procède à une réduction de l'alimentation en air du moteur (1), on réduit cette alimentation jusqu'à atteindre entre 5 et 40% de la capacité totale d'alimentation en air du moteur (1) par ces moyens d'alimentation en air (2).

7. Dispositif (7) pour réduire le niveau acoustique sonore d'un moteur thermique (1) et de son système d'échappement équipant un véhicule automobile, ce moteur (1) étant, d'une part, alimenté en mélange carburé par l'intermédiaire de moyens d'alimentation en air (2) et de moyens d'alimentation en carburant (3) et, d'autre part, associé à des moyens (4) agencés pour commander ces moyens d'alimentation (2, 3), **caractérisé par le fait qu'**il comporte des moyens (10) conçus aptes, en cas de relâchement ou d'interruption de l'actionnement des moyens de commande (4) des moyens d'alimentation (2, 3), à agir sur les moyens d'alimentation en air (2) en assurant une réduction, voire une coupure, de l'alimentation en air du moteur (1).

8. Dispositif (7) selon la revendication 7, **caractérisé par le fait qu'**il comporte des moyens (8) agencés pour détecter un relâchement ou une interruption de l'actionnement des moyens (4) de commande des moyens d'alimentation (2, 3).

9. Dispositif (7) selon l'une quelconque des revendications 7 ou 8, **caractérisé par le fait qu'**il comporte, encore, des moyens (9) agencés pour assurer un relevé du régime du moteur et que les moyens (10) conçus aptes, en cas de relâchement ou d'interruption de l'actionnement des moyens de commande (4), à agir sur les moyens d'alimentation en air (2) sont agencés pour réduire, voire pour couper, l'alimentation en air du moteur (1), ceci en fonction du régime-moteur relevé.

10. Dispositif (7) selon la revendication 9, **caractérisé par le fait qu'**il comporte des moyens aptes à commander les moyens de relevé (9) du régime-moteur en cas de relâchement ou d'interruption de l'actionnement des moyens de commande (4) des moyens d'alimentation (2, 3).

11. Dispositif (7) selon l'une quelconque des revendications 9 ou 10, **caractérisé par le fait que** les moyens (10) agissant sur les moyens d'alimentation en air (2) comportent, d'une part, des moyens (11) conçus aptes à procéder à une comparaison entre le régime-moteur relevé et au moins une plage déterminée de régime-moteur et, d'autre part, des moyens (12), associés aux moyens de comparaison (11), et conçus aptes à commander, de manière spécifique en fonction du résultat de la comparaison, les moyens d'alimentation en air (2) pour assurer une réduction, voire une coupure, de l'alimentation en air du moteur.

12. Dispositif (7) selon la revendication 11, **caractérisé par le fait que** les moyens (12) conçus aptes à commander, de manière spécifique, les moyens d'alimentation en air (2) sont agencés pour, d'une part et en cas de relevé d'un régime-moteur se situant dans une plage déterminée de régime-moteur, commander, au niveau desdits moyens d'alimentation en air (2), la réduction de l'alimentation en air du moteur (1) tout en assurant le passage d'un flux d'air et, d'autre part et en cas de relevé d'un régime-moteur se situant en dehors d'une telle plage déterminée de régime-moteur, commander, au niveau desdits moyens d'alimentation en air (2), l'interruption totale de l'alimentation en air du moteur (1).

13. Dispositif (7) selon l'une quelconque des revendications 7 à 12, **caractérisé par le fait que** les moyens conçus pour assurer une réduction de l'alimentation en air sont agencés pour réduire cette alimentation jusqu'à atteindre entre 5 et 40% de la capacité totale d'alimentation en air du moteur (1) par les moyens d'alimentation en air (2).

14. Dispositif (7) selon l'une quelconque des revendications 7 à 13, **caractérisé par le fait qu'**il comporte au moins un calculateur au niveau duquel sont définis les moyens de commande (4) des moyens d'alimentation (2 , 3) et/ou les moyens de détection (8) et/ou les moyens (10) aptes à agir sur les moyens d'alimentation en air (2) et/ou, le cas échéant, les moyens de comparaison (11) et/ou les moyens (12) de commande spécifique des moyens d'alimentation en air (2) et/ou les moyens de commande des moyens (9) de relevé du régime-moteur.
